# EUROPEAN PATENT APPLICATION

(11) **EP 1 613 045 A1**
(43) Date of publication of application: **04.01.2006**
(21) Application number: 05253929.3
(22) Date of filing: 24.06.2005
(51) Int. Cl.: H04M 3/533, H04M 3/42, H04L 12/54, H04M 1/725

(54) **Transfer of Voice Messages from a Voice Mail System via MMS**

(30) Priority: 02.07.2004 US 884301
(71) Applicant: LUCENT TECHNOLOGIES INC., Murray Hill, New Jersey 07974-0636 (US)
(72) Inventor: Coble, John Walter, Gahanna, OH 43230 (US); Cohen, Marc A., Kirkland, Washington 98033 (US); Heck, John Frederick, Wheaton, IL 60187 (US)
(74) Representative: Sarup, David Alexander

(57) **Abstract**

A mobile and data application server component of an apparatus in one example delivers contents of a voice message from a voice mailbox to a multimedia capable device.

## Description

### TECHNICAL FIELD

The invention relates generally to messaging and more particularly to multimedia messaging.

### BACKGROUND

Today, in order to access a message in a voice mailbox, a user of a mobile station, for example, a cell phone, manually retrieves the message. For example, the user of the mobile station calls the voice mailbox. The user enters a password and navigates one or more menus to access the message. To access a message saved in the voice mailbox at a later time, the user re-dials into the voice mailbox, re-enters the password, and re-navigates the menus to re-retrieve the message. Specifically requesting information from a source is known as "pull technology." The user of the mobile station requests the message from the voice mailbox by calling the voice mailbox, entering the password, and navigating the menus to access the message. As one shortcoming, pull technology requires manual intervention by the user of the mobile station to retrieve the message from the voice mailbox. It is desirable to reduce the number of steps required by the user to access a message in a voice mailbox.

Thus, a need exists to automatically provide a message from a voice mailbox to a user of a mobile station.

### SUMMARY

The invention in one implementation encompasses an apparatus. The apparatus comprises a mobile and data application server component that delivers a multimedia message to a multimedia capable device from a voice mailbox.

Another implementation of the invention encompasses a method. Contents of a multimedia message from a voice mailbox are delivered to a multimedia capable device.

### DESCRIPTION OF THE DRAWINGS

Features of exemplary implementations of the invention will become apparent from the description, the claims, and the accompanying drawings in which:
FIG. 1 is a representation of one or more mobile stations, one or more switch components, one or more voice messaging components, one or more mobile and data application server components, one or more proxy components, one or more multimedia message service center components, one or more short message service center components, and one or more networks.
FIG. 2 is a representation of an exemplary process flow of the mobile and data application server component delivering a multimedia message from the voice messaging component to the mobile station.

### DETAILED DESCRIPTION

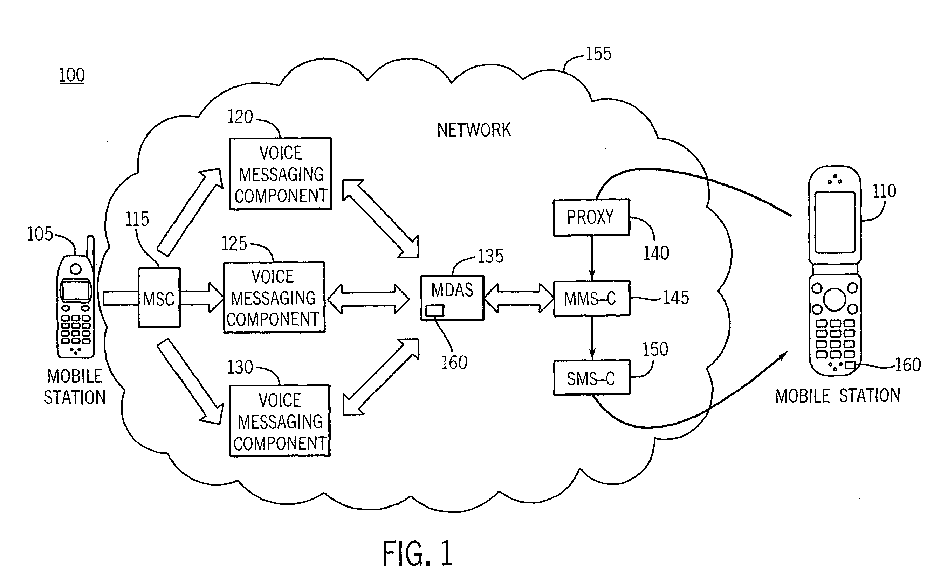

Turning to FIG. 1, an apparatus 100 in one example comprises one or more mobile stations 105 and 110, one or more switch components 115, one or more voice messaging components 120, 125, and 130, one or more mobile and data application server components ("MDASs") 135, one or more proxy components 140, one or more multimedia message service center ("MMScs") components 145, one or more short message service center ("SMSCs") components 150, and one or more networks 155. The mobile station 105 in one example comprises a mobile phone. The mobile station 110 in one example comprises a multimedia capable device, for example, a multimedia messaging system ("MMS") mobile phone. The mobile stations 105 and/or 110 comprise one or more instances of a recordable data storage medium 160. Mobile station 110 in one example stores one or more multimedia messaging service messages delivered to the mobile station 110 in the instances of the recordable data storage medium 160. The switch component 115 comprises one or more mobile switching centers ("MSCs").

The voice messaging components 120, 125, and/or 130 in one example comprise one or more of a Sierra® voice mail server (Lucent Technologies, 600 Mountain Ave., Murray Hill, NJ 07974-0636, 1 888 458-2368, http://www.lucent.com), and Lucent Technologies AnyPath® voice messaging server (Lucent Technologies, 600 Mountain Ave., Murray Hill, NJ 07974-0636, 1 888 458-2368, http://www.lucent.com). The proxy component 140 in one example comprises a proxy server. The proxy component 140 in one example functions as a relay between the mobile station 110 and the multimedia message service center component 145, as will be appreciated by those skilled in the art. The multimedia message service center 145 comprises a server that enables transmission of graphics, video clips and sound files between multimedia capable devices. The short message service center 150 comprises a server that enables transmission of short, text messages between mobile stations 105 and 110.

The network 155 in one example comprises a telecommunications network, for example, a public land mobile network. The network 155 in one example provides mobile cellular services. The network 155 in one example operates in the circuit-switched domain and in the packet-based domain. For example, the network 155 employs one or more mobile switching centers ("MSCs") to operate in the circuit-switched domain and one or more packet-based network elements to operate in the packet-based domain.

The mobile station 105 cooperates with the switch component 115 to initiate a call over the network 155 to the mobile station 110 on the network 155. The mobile station 110 fails to respond to the call. The switch component 115 routes the call to one of the voice messaging components 120, 125, and 130. A user of the mobile station 105 deposits a voice message for a user of the mobile station 110 through employment of one of the voice messaging components 120, 125, and/or 130. In one example, the user of the mobile station 105 records a voice message in a voice mailbox for the mobile station 110. In another example, the user of the mobile station stores a fax in the voice mailbox for the mobile station 110. The voice messaging components 120, 125, and 130 store the voice message for the user of the mobile station 110.

The voice messaging components 120, 125, and 130 send a notification to the mobile data application component 135 indicating receipt of the voice message in the voice mailbox for the mobile station 110. The notification in one example contains the voice message in the voice mailbox for the mobile station 110. The voice messaging components 120, 125, and/or 130 in one example employ a Short Message Peer to Peer ("SMPP") protocol to send the notification to the mobile and data application server component 135.

The mobile and data application server component 135 communicates with a plurality of voice messaging components, for example, the voice messaging component 120, 125, and 130, to deliver one or more voice messages in a plurality of voice mailboxes for a plurality of multimedia capable devices (e.g., the mobile station 110) to the plurality of multimedia capable devices. The mobile and data application server component 135 receives a voice message from the voice mailbox for the mobile station 110 from the voice messaging component 120. The voice message from the voice mailbox for the mobile station 110 comprises one or more speech contents and one or more non-voice portions associated with the voice message.

The mobile and data application server component 135 in one example translates the voice message into a multimedia message. For example, the mobile and data application server component 135 formats the voice message from the voice mailbox for the mobile station 110 into a multimedia message, for example, a multimedia messaging service message. The voice message from the voice mailbox for the mobile station 110 comprises a speech message from a user of the mobile station 105 and a non-voice portion indicating a duration of the voice message from the voice mailbox for the mobile station 110, for example, thirty seconds, and a calling party number, for example, (312) 555-1000. The mobile and data application server component 135 transcodes one or more speech portions of the voice message from the voice mailbox for the mobile station 110 into one or more voice portions audible by the mobile station 110. The mobile and data application server component 135 replaces the one or more non-voice portions of the voice message from the voice mailbox for the mobile station 110 with one or more text portions indicative of the one or more non-voice portions. The mobile and data application server component 135 inserts the one or more voice portions and the one or more non-voice portions into the multimedia messaging service message. The mobile and data application server component 135 in one example inserts one or more images or graphics into the multimedia messaging service message. For example, the mobile and data application server component 135 inserts an image of a logo for a service provider of the network 155.

The mobile and data application server component 135 communicates with the multimedia message service center component 145 to deliver the multimedia messaging service message to the mobile station 110. The mobile and data application server component 135 pushes the multimedia messaging service message to the multimedia message service center component 145. The mobile and data application server component 135 communicates the multimedia messaging service message to the multimedia message service center component 145 through employment of a protocol for transmission of multimedia messages, for example, a Multimedia Messaging Service 3 ("MM3") protocol (e.g., a Simple Message Transport Protocol ("SMTP")), and a Multimedia Messaging Service 7 ("MM7") protocol (e.g., a Simple Object Access Protocol ("SOAP"), and EXtensible Markup Language ("XML")).

In one example, the mobile and data application server component 135 and the multimedia message service center component 145 cooperate to provide for an unreliable delivery of the multimedia messaging service message to the mobile station 110. For example, mobile and data application server component 135 pushes the multimedia messaging service message to the multimedia message service center component 145 through employment of the Multimedia Messaging Service 3 protocol. The mobile and data application server component 135 assumes that the mobile station 110 receives the multimedia messaging service message from the multimedia message service center component 145, as will be appreciated by those skilled in the art.

In another example, the mobile and data application server component 135 and the multimedia message service center component 145 cooperate to provide for a reliable delivery of the multimedia messaging service message (e.g., transcoded voice message) to the mobile station 110. For example, the mobile and data application server component 135 and the multimedia message service center component 145 cooperate through employment of the Multimedia Messaging Service 7 protocol to validate notification to the mobile station 110. The mobile and data application server component 135 comprises one or more instances of the recordable data storage medium 160. The mobile and data application server component 135 stores the multimedia messaging service message in the instance of the recordable data storage medium 160. The multimedia message service center component 145 delivers the multimedia messaging service message to the mobile station 110. Upon delivery of the multimedia messaging service message to the mobile station 110, the multimedia messaging service center component 145 sends a delivery confirmation notification to the mobile and data application server component 135. Where the mobile and data application server component 135 fails to receive the delivery confirmation notification within a pre-configured duration of time, the mobile and data application server component 135 retrieves the multimedia messaging service message from the recordable data storage medium 160 and re-sends the multimedia messaging service message to the multimedia messaging service center component 145.

The multimedia message service center component 145 delivers the multimedia messaging service message to the mobile station 110 through cooperation with the proxy component 140 and the short message service center component 150. The multimedia message service center component 145 sends a notification to the short message service center component 150. The notification in one example comprises a Short Message Service ("SMS") message. The short message service center component 150 sends the notification to the mobile station 110. A user of the mobile station 110 initiates a request to get the multimedia messaging service message to the proxy component 140. For example, the user of the mobile station 110 initiates a soft key press. The proxy component 140 relays the request to obtain the multimedia messaging service message to the multimedia message service center component 145. The multimedia message service center component 145 cooperates with the proxy component 140 to deliver the multimedia messaging service message to the mobile station 110.

The mobile and data application server component 135 cooperates with the voice messaging components 120, 125, and/or 130 to update a voice mailbox for the mobile station 110 based on one or more configuration options for the voice mailbox for the mobile station 110. The configuration option in one example is managed by a system administrator. The mobile and data application server component 135 determines to modify the voice messages of the voice mailbox for the mobile station 110 based on a configuration option for the voice mailbox for the mobile station 110. In one example, the mobile and data application server component 135 determines to modify the voice messages of the voice mailbox by deleting the voice messages from the voice mailbox for the mobile station 110 based on the configuration option. For example, upon pushing a multimedia messaging service message associated with a voice message from a voice mailbox for the mobile station 110 to the multimedia message service center component 145, or upon receiving a delivery confirmation message from the multimedia message service center component 145, the mobile and data application server component 135 in one example deletes the voice message from the voice mailbox for the mobile station 110. In another example, the mobile and data application server component 135 determines to modify the voice messages of the voice mailbox by marking the voice messages of the voice mailbox for the mobile station 110 as having been read based on the configuration option. For example, upon receipt of a delivery confirmation from the multimedia message service center component 145, the mobile and data application server component 135 marks a voice message as having been read.

An illustrative description of exemplary operation of the apparatus 100 is presented, for explanatory purposes.

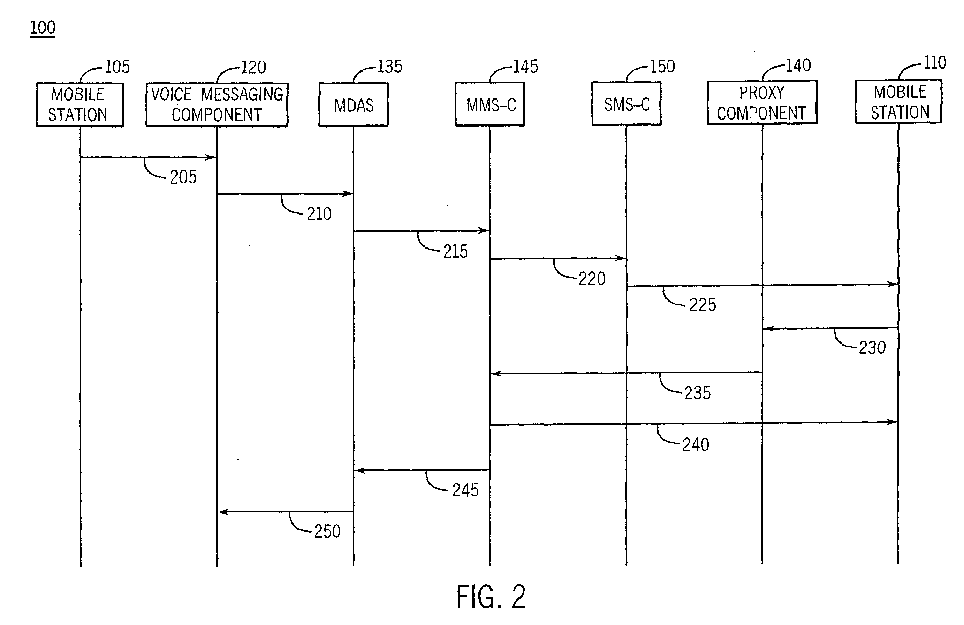

Turning to FIG. 2, the mobile station 110 receives a multimedia message from a user of the mobile station 105. In STEP 205, the user of the mobile station 105 records the voice message in a voice mailbox for the mobile station 110 on the voice messaging component 120. In STEP 210, the voice messaging component 120 sends the voice message to the mobile and data application server component 135. The mobile and data application server component 135 reformats the voice message into a multimedia messaging service message and adds a user-defined image into the multimedia messaging service message. In STEP 215, the mobile and data application server component 135 pushes the multimedia messaging service message to the multimedia message service center component 145. In STEP 220, the multimedia message service center component 145 sends a short message service notification to the short message service center component 150. In STEP 225, the short message service center component 150 forwards the short message service notification to the mobile station 110. In STEP 230, a user of the mobile station 110 presses a key to initiate a request for the multimedia messaging service message to the proxy component 140. In STEP 235, the proxy component 140 sends the request to the multimedia message service center component 145. In STEP 240, the multimedia message service center component 145 delivers the multimedia message service message to the mobile station 110. The mobile station 110 stores the multimedia message service message. The user of the mobile station 110 listens to the multimedia messaging service message. In STEP 245, the multimedia message service center component 145 sends a delivery confirmation notification to the mobile and data application server component 135. In STEP 250, the mobile and data application server component 135 in one example deletes the voice message from the voice mailbox (or marks the message as being read) for the mobile station 110.

The apparatus 100 in one example comprises a plurality of components such as one or more of electronic components, hardware components, and computer software components. A number of such components can be combined or divided in the apparatus 100. An exemplary component of the apparatus 100 employs and/or comprises a set and/or series of computer instructions written in or implemented with any of a number of programming languages, as will be appreciated by those skilled in the art.

The apparatus 100 in one example employs one or more computer-readable signal-bearing media. Examples of a computer-readable signal-bearing medium for the apparatus 100 comprise the recordable data storage medium 160 of the mobile station 110 and the mobile and data application server component 135. For example, the computer-readable signal-bearing medium for the apparatus 100 comprises one or more of a magnetic, electrical, optical, biological, and atomic data storage medium. In one example, the computer-readable signal-bearing medium comprises a modulated carrier signal transmitted over a network comprising or coupled with the apparatus 100, for instance, one or more of a telephone network, a local area network ("LAN"), the internet, and a wireless network.

The steps or operations described herein are just exemplary. There may be many variations to these steps or operations without departing from the spirit of the invention. For instance, the steps may be performed in a differing order, or steps may be added, deleted, or modified.

Although exemplary implementations of the invention have been depicted and described in detail herein, it will be apparent to those skilled in the relevant art that various modifications, additions, substitutions, and the like can be made without departing from the spirit of the invention and these are therefore considered to be within the scope of the invention as defined in the following claims.

## Claims

1. An apparatus, comprising:
a mobile and data application server component that formats contents of a voice message into a multimedia messaging service message;
wherein the mobile and data application server component delivers the multimedia messaging service message to a multimedia capable device.

2. The apparatus of claim 1, wherein the mobile and data application server component transcodes one or more speech portions of the contents of the voice message into a format audible by the multimedia capable device;
wherein the mobile and data application server inserts the one or more speech portions into the multimedia messaging service message.

3. The apparatus of claim 1, wherein the mobile and data application server component inserts one or more text portions indicative of one or more non-voice portions of the contents of the voice message for the multimedia capable device into the multimedia messaging service message.

4. The apparatus of claim 1, wherein the mobile and data application server component translates the contents of the voice message into a multimedia message;
wherein the mobile and data application server component communicates with a multimedia message service center to deliver the multimedia message to the multimedia capable device;
wherein the mobile and data application server component and the multimedia message service center communicate through employment of a protocol for transmission of multimedia messages;
wherein the mobile and data application server component employs a push technology to deliver the multimedia message to the multimedia message service center.

5. The apparatus of claim 4, wherein the mobile and data application server component and the multimedia message service center communicate through employment of one or more of: a Multimedia Messaging Service 3 protocol, and a Multimedia Messaging Service 7 protocol.

6. A method, comprising the steps of:
formatting contents of a voice message from a voice mailbox into a multimedia messaging service message; and
delivering the multimedia message service message to a multimedia capable device through employment of a multimedia messaging service communication technology.

7. The method of claim 6, wherein the step of formatting the contents of the voice message from the voice mailbox into the multimedia messaging service message comprises the steps of:
transcoding one or more voice portions of the contents of the voice message into a format accepted by the multimedia capable device; and
replacing one or more non-voice portions of the contents of the voice message with one or more text messages; and
inserting the transcoded one or more voice portions and the one or more text messages into the multimedia messaging service message.

8. The method of claim 6, wherein the step of formatting the contents of the voice message from the voice mailbox into the multimedia messaging service message comprises the step of:
inserting one or more images into the multimedia messaging service message.

9. The method of claim 6, wherein the step of delivering the multimedia message service message to the multimedia capable device through employment of the multimedia messaging service communication technology comprises the steps of:
translating the contents of the voice message into a multimedia messaging service message; and
pushing the multimedia messaging service message to a multimedia message service center.

10. The method of claim 6, further comprising the steps of:
receiving the contents of the voice message from the voice mailbox;
translating the contents of the voice message into contents of a multimedia message;
formatting the contents of the multimedia message into a multimedia messaging service message; and
sending the multimedia messaging service message to the multimedia capable device.
